# EUROPÄISCHE PATENTSCHRIFT

(11) **EP 3 647 608 B1**
(45) Veröffentlichungstag und Bekanntmachung des Hinweises auf die Patenterteilung: **03.08.2022**
(21) Anmeldenummer: 19197469.0
(22) Anmeldetag: 16.09.2019
(51) Int. Cl.: F16B 11/00, F16B 5/00, F16B 45/00

(54) **BEFESTIGER**
MOUNTER
DISPOSITIF DE FIXATION

(30) Priorität: 31.10.2018 DE 202018106227 U
(43) Veröffentlichungstag der Anmeldung: 06.05.2020
(73) Patentinhaber: Ehni Schaumstofftechnik GmbH, 73266 Bissingen (DE)
(72) Erfinder: Aufrecht, Hans Werner, 71563 Affalterbach (DE)
(74) Vertreter: Ruckh, Rainer Gerhard

(56) Entgegenhaltungen:
- EP-A1- 3 225 860
- WO-A1-2007/021170
- WO-A1-2014/166773

## Beschreibung

Die Erfindung betrifft einen Befestiger.

Eine einen derartigen Befestiger bildende Vorrichtung ist aus der WO 2014/166773 A1 bekannt.

Diese Vorrichtung dient zur Ausbildung einer Klebeverbindung zwischen einem Gegenstand und einer Auflage. Der Gegenstand weist ein Reservoir mit einem Klebemittel auf, welches mit einer eine Sollbruchstelle aufweisenden Wand an eine Kontaktfläche angrenzt. Der Gegenstand weist einen Knopf mit einem diesem zugeordneten Durchstoßmittel in Form eines Dorns oder einer Spitze auf, wobei durch Betätigen des Knopfs das Durchstoßmittel einen Durchbruch in der Wand des Reservoirs generiert, durch welchen Klebemittel aus dem Reservoir auf die Kontaktfläche geleitet ist und eine Klebeschicht zur Befestigung des Gegenstands auf der Auflage ausbildet.

Bei dieser Vorrichtung wird das zur Fixierung an der Auflage benötigte Klebemittel im Gegenstand selbst gelagert. Die Freisetzung des Klebemittels erfolgt auf einfache Weise auf Knopfdruck, das heißt durch Betätigen eines am oder im Gegenstand selbst vorgesehenen Knopfs. Auf diesen Knopfdruck strömt das Klebemittel aus dem Reservoir auf die Kontaktfläche und bildet dort eine Klebeschicht, mittels derer der Gegenstand auf der Auflage befestigt werden kann.

Vorteilhaft hierbei ist, dass die Klebeverbindung schnell hergestellt werden kann.

Nachteilig ist, dass die Integration des Durchstoßmittels in Form eines Dorns oder einer Spitze einen unerwünscht hohen Konstruktionsaufwand erfordert, zumal das Durchstoßmittel exakt zur Wand platziert werden muss, um ein reproduzierbares Durchstoßen dieser Wand zu gewährleisten. Dies erfordert eine exakte, toleranzarme Montage und dadurch bedingt hohe Herstellkosten bei der Festigung der Vorrichtung.

Die WO 2007/021170 A1 betrifft einen Befestiger, der zwei getrennte Aufnahmen zur Lagerung jeweils einer Klebstoffkomponente eines Mehrkomponenten-Klebstoffs aufweist. Die Aufnahmen bilden eine koaxiale Anordnung. Von jeder Aufnahme führt ein Kanal zu einer Mischkammer, die an einer Befestigungsseite, mit der das Befestigen auf einem Substrat fixiert werden kann, ausmündet. Durch eine Verschiebe- oder Drehbewegung des beweglichen Teils des Befestigers relativ zu einem stationären Teil werden die Aufnahmen aufgebrochen und die Klebstoffkomponenten werden über die Kanäle der Mischkammer zugeführt, wo eine Vermischung der Klebstoffkomponenten zum Mehrkomponenten-Klebstoff erfolgt.

Der Erfindung liegt die Aufgabe zugrunde, einen Befestiger der eingangs genannten Art auszubilden, welcher einen einfachen Aufbau und zugleich eine hohe Funktionalität und Funktionssicherheit aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen Befestiger mit einem Träger, welcher eine Befestigungsseite zur Befestigung an einem Gegenstand aufweist. Der Träger ist in axialer Richtung von einer Bohrung durchsetzt. In der Bohrung sind ein Klebstoffreservoir und eine Reservoireinheit für einen hydrophilen Stoff in axialer Richtung der Bohrung gegeneinander verschiebbar gelagert. Das Klebstoffreservoir und der Aufnahmekörper bilden eine koaxiale Anordnung, wobei das Klebstoffreservoir die Reservoireinheit umschließt. In einer Ausgangsstellung der Reservoireinheit relativ zum Träger ist ein aerober Klebstoff in einer geschlossenen Aufnahme des Klebstoffreservoirs gelagert. Der hydrophile Stoff ist in einer geschlossenen Aufnahme in der Reservoireinheit gelagert. Durch eine Verschiebung der Reservoireinheit in eine Betätigungsstellung sind die Aufnahmen mittels Durchstoßmitteln aufgebrochen und der aerobe Klebstoff durch eine Kanalstruktur zwischen dem Klebstoffreservoir und der Reservoireinheit und der hydrophile Stoff durch Austrittsöffnungen in der Reservoireinheit der Befestigungsseite so zugeführt, dass eine selbsttätige Mischung des aeroben Klebstoffs und des hydrophilen Stoffs erfolgt.

Der erfindungsgemäße Befestiger weist einen einfachen und robusten Aufbau auf. Der Befestiger weist eine geringe Anzahl von Einzelteilen auf, die zum Beispiel in Form von Kunststoff-Spritzgussteilen einfach und kostengünstig in hohen Stückzahlen gefertigt werden können.

Wesentlich ist, dass der aerobe Klebstoff und der hydrophile Stoff als Komponenten eines Befestigungsmittels in separaten, abgeschlossenen Einheiten, nämlich dem Klebstoffreservoir und der Reservoireinheit, gelagert sind. Dort sind diese Komponenten sicher und langzeitstabil aufgenommen, solange sich die Reservoireinheit in seiner Ausgangsstellung befindet. Mit der Reservoireinheit in der Ausgangsstellung bildet der Befestiger eine Baueinheit, die versandfertig an Kunden ausgeliefert werden kann oder in Auslagen von Geschäften präsentiert werden kann.

Für den Gebrauch des Befestigers, das heißt zur Befestigung an einem Gegenstand, muss der Befestiger mit dem Träger nur gegen diesen Gegenstand gedrückt werden, so dass die Reservoireinheit in die Betätigungsstellung verschoben wird.

Durch geeignete Durchstoßmittel, die vorzugsweise im Bereich der Reservoireinheit angeordnet sind und/oder von dieser gebildet sind, werden bei Überführen der Reservoireinheit in die Betätigungsstellung die Aufnahmen für den aeroben Klebstoff und den hydrophilen Stoff aufgebrochen und zur Befestigungsseite gefördert, wo sich der aerobe Klebstoff und der hydrophile Stoff über die gesamte Befestigungsseite homogen zu einem Befestigungsmittel vermischen, mit dem der Befestiger mit hoher Haftkraft am Gegenstand fixiert ist.

Ein wesentlicher Vorteil besteht darin, dass sowohl der aerobe Klebstoff über die Kanalstruktur als auch der hydrophile Stoff über die Austrittsöffnungen großflächig der Befestigungsseite zugeführt sind, so dass sich dort der aerobe Klebstoff und der hydrophile Stoff gut durchmischen können.

Der hydrophile Stoff bildet dabei generell einen Reaktionsbeschleuniger für den aeroben Klebstoff, der das Aushärten des Befestigungsmittels beschleunigt.

Vorteilhaft ist der aerobe Klebstoff von silanen Polymeren oder von Polyurethan gebildet.

Weiter vorteilhaft enthält der hydrophile Stoff Feuchtigkeit oder ist von einer Feuchtigkeit gebildet.

Dabei ist der hydrophile Stoff von Baumwolle, Cellulose, einem Faserverbundwerkstoff, einem Salz, einem Mineral, einem Harz, Glycerin oder Propylenglykol gebildet.

Weiterhin ist die Feuchtigkeit von Wasser oder Isopropanol gebildet, welche in flüssiger Form oder in Gelform vorliegt.

Die Feuchtigkeit kann in flüssiger Form zur Durchmischung mit einem in Feuchtkörperform vorliegenden hydrophilen Stoff verwendet werden. Bildet die Feuchtigkeit selbst den hydrophilen Stoff, liegt diese vorteilhaft in Gelform vor.

Gemäß einer vorteilhaften Ausführungsform weist die Reservoireinheit einen hohlzylindrischen Reservoirkörper auf, an dessen äußerer Mantelfläche durch in axialer Richtung verlaufenden Rippen getrennte Einbuchtungen vorgesehen sind, welche die Kanalstruktur ausbilden.

Dabei weist der hohlzylindrische Reservoirkörper ein der Befestigungsseite zugewandtes Bodenteil auf, in welchem die Austrittsöffnungen vorgesehen sind.

Die so ausgebildete Reservoireinheit in Form des Reservoirkörpers, das heißt in Form eines Kolbens, weist einen einfachen robusten Aufbau auf, wobei besonders vorteilhaft ist, dass der Reservoirkörper das einzige bewegliche Teil des Befestiger bildet.

Die sich über den gesamten Umfang des Reservoirkörpers erstreckenden Einbuchtungen bilden eine großflächige Kanalstruktur, mit der nach Aufbrechen der Aufnahmen der aerobe Klebstoff schnell und flächig verteilt der Befestigungsseite zugeführt wird. Auch die über das gesamte Bodenteil verteilten Austrittsöffnungen sorgen für eine großflächige Zufuhr von hydrophilem Stoff zur Befestigungsseite.

Weiter vorteilhaft ist das Klebstoffreservoir in Form eines hohlzylindrischen Körpers ausgebildet, wobei dessen innenliegenden Mantelflächen entlang der äußeren Mantelflächen des Reservoirkörpers führbar sind.

In dem so ausgebildeten Klebstoffreservoir kann der Reservoirkörper ohne Gefahr eines Verkantens sicher verschoben werden. Weiterhin ist vorteilhaft, dass die innere Mantelfläche des Klebstoffreservoirs die Einbuchtungen an der äußeren Mantelfläche des Reservoirkörpers abschließt, wodurch geschlossene Kanalstrukturen gebildet werden.

Gemäß einer geometrisch vorteilhaften Ausgestaltung weist die Bohrung einen kreisförmigen Querschnitt auf, wobei die Berandungskontur der Bohrung an die Außenkonturen des Reservoirkörpers und der Reservoireinheit angepasst ist.

Damit bilden der Reservoirkörper und das Klebstoffreservoir an den Querschnitt der Bohrung angepasste rotationssymmetrische Bauteile.

Gemäß einer vorteilhaften Ausgestaltung ist die Oberseite der Bohrung mit einem mit dem Träger fest verbundenen Deckel abgeschlossen.

Der Deckel schließt die in der Bohrung des Trägers befindlichen Bauteile nicht nur dicht ab, vielmehr weist der Deckel auch die Funktion eines Betätigungsknopfes auf.

Wird ein Anpressdruck auf den Deckel ausgeübt, wird die Reservoireinheit aus der Ausgangsstellung in die Betätigungsstellung durch eine Bewegung gegen den Deckel geführt.

Dabei steht in der Ausgangsstellung der Reservoirkörper über die Befestigungsseite hervor und in der Betätigungsstellung liegt die Außenseite des Bodenteils des Reservoirkörpers in der Ebene der Befestigungsseite.

Gemäß einer vorteilhaften Ausführungsform ist an dem Deckel ein ein Durchstoßmittel bildender Stößel befestigt.

Dabei weist der Stößel einen in den Hohlraum des Reservoirkörpers ragenden Stößelkopf auf, der von der Aufnahme mit dem hydrophilen Stoff umgeben ist.

Vorteilhaft fällt die Längsachse des Stößels mit der Symmetrieachse des Reservoirkörpers zusammen.

Die Funktion des Stößels ist derart, dass der der Befestigungsseite abgewandte obere Randbereich des Reservoirkörpers ein Durchstoßmittel bildet, mittels dessen in der Betätigungsstellung die Aufnahme für den aeroben Klebstoff aufgebrochen ist, so dass dieser über das Kanalsystem zur Befestigungsseite geführt ist.

Vorteilhaft erstreckt sich dabei die Aufnahme des hydrophilen Stoffs über die gesamte Querschnittsfläche des Innenraums des Reservoirkörpers. Auch der Stößelkopf ist großflächig und erstreckt sich über einen Großteil dieser Querschnittsfläche. Dadurch wird erreicht, dass bei Überführen des Reservoirkörpers in die Betätigungsstellung die Aufnahme für den hydrophilen Stoff großflächig aufgebrochen wird und der hydrophile Stoff über die gesamte Querschnittsfläche verteilt über die Austrittsöffnungen ausgeleitet und der Befestigungsseite zugeführt wird.

Gemäß einer geometrisch vorteilhaften Ausgestaltung weist der Träger einen flächigen Grundkörper mit einem rohrförmigen Ansatz, in welchem die Bohrung verläuft, auf.

Der so ausgebildete Befestiger weist eine flache, einfach handhabbare Bauform auf.

Weiter vorteilhaft ist die Befestigungsseite des Trägers mit einem eine Klebeschicht aufweisenden Rand eingefasst.

Mit der Klebeschicht, die insbesondere in Form einer durch eine Abdeckfolie gesicherte Klebefolie gebildet ist, kann bequem eine Vorfixierung des Befestigers am Gegenstand erzielt werden.

Vorteilhaft ist die Befestigungsseite des Trägers mit einem Verpackungsdeckel abschließbar.

Durch den Verpackungsdeckel ist der Reservoirkörper beziehungsweise die Reservoireinheit in ihrer Ausgangsstellung gesichert, so dass ein versehentliches Überführen in die Betätigungsstellung sicher ausgeschlossen ist. Der Befestiger mit dem daran fixierten Verpackungsdeckel bildet somit eine transportable Einheit.

Gemäß einer vorteilhaften Ausführungsform bildet der Befestiger einen Adapter aus, wobei am Träger ein Adapterteil befestigbar ist.

Das Adapterteil dient zur Befestigung von Objekten. Beispielsweise kann das Adapterteil als Rohrschelle ausgebildet sein.

Die Erfindung wird im Folgenden anhand der Zeichnungen erläutert. Es zeigen:
- Figur 1:: Einzeldarstellung der Komponenten des erfindungsgemäßen Befestigers.
- Figur 2:: Darstellung des Befestigers gemäß Figur 1 im zusammengebauten Zustand mit einem Reservoirkörper in seiner Ausgangsstellung.
- Figur 3:: Darstellung des Befestigers gemäß Figur 1 im zusammengebauten Zustand mit einem Reservoirkörper in seiner Betätigungsstellung
- Figur 4:: Befestiger gemäß den Figuren 1 bis 3 mit einem Adapterteil.

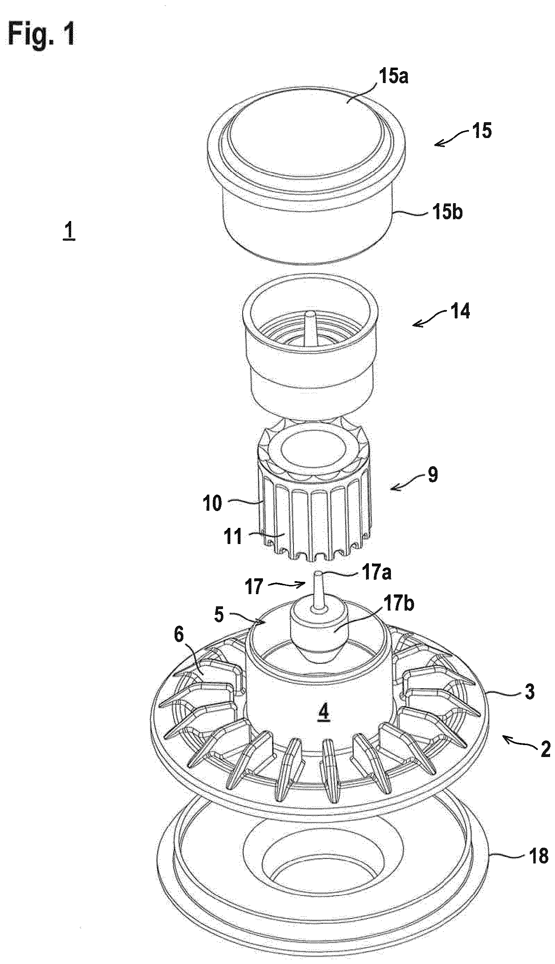

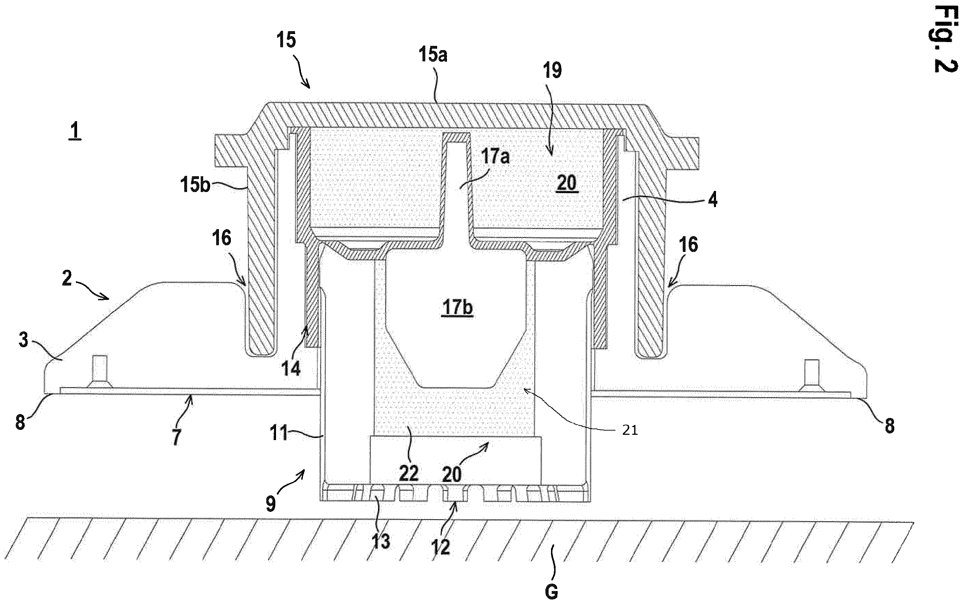

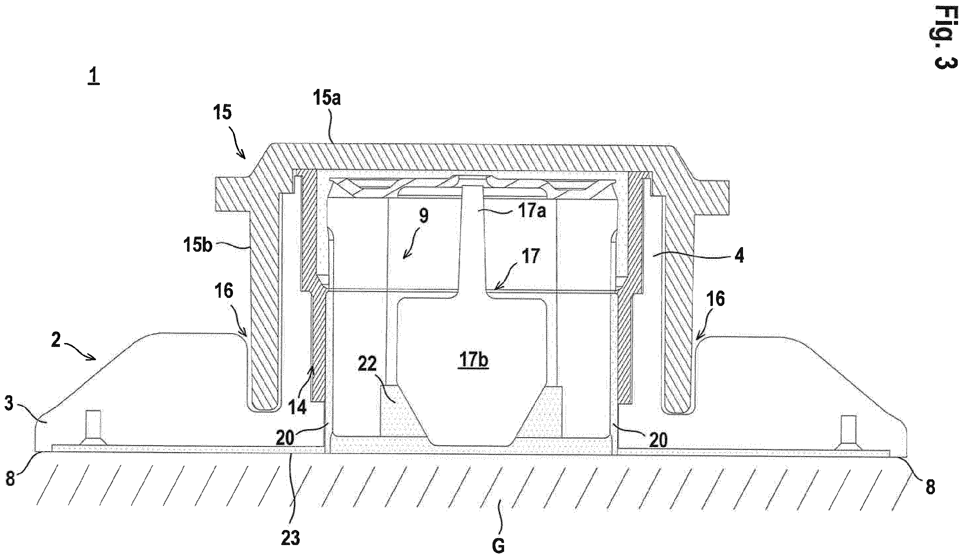

Die Figuren 1 bis 3 zeigen ein Ausführungsbeispiel des erfindungsgemäßen Befestigers 1, wobei Figur 1 die einzelnen Komponenten des Befestigers 1 zeigt und in den Figuren 2 und 3 der zusammengebaute Befestiger 1 dargestellt ist.

Der Befestiger 1 dient generell zur Befestigung eines Gegenstands G, der in den Figuren 2 und 3 schematisch dargestellt ist. Die ebene Oberfläche des Gegenstands G verläuft in einer horizontalen Ebene. Bezogen auf diese Ebene sind nachfolgend die Begriffe "oben" und "unten" für Komponenten des Befestigers 1 definiert. Natürlich kann die Oberfläche des Gegenstands G auch in beliebig anderen Richtungen orientiert sein.

Die in Figur 1 dargestellten Komponenten des Befestigers 1 bestehen vorzugsweise aus Kunststoff-Spritzgussteilen. Alle Komponenten sind rotationssymmetrisch ausgebildet.

Eine erste Komponente des Befestiger 1 ist ein Träger 2. Der Träger 2 besteht aus einem flächigen kreisscheibenförmigen Grundkörper 3, in dessen Zentrum ein mit dem Grundkörper 3 einstückig ausgebildeter rohrförmiger Ansatz 4 vorgesehen ist. Der rohrförmige Ansatz 4 weist eine den Träger 2 in axialer Richtung durchsetzende Bohrung 5 auf.

An der Oberseite des Grundkörpers 3 sind in Umfangsrichtung verteilt identische, in radialer Richtung verlaufende Verstärkungsrippen 6 vorgesehen, die an der äußeren Mantelfläche des rohrförmigen Ansatzes 4 ausmünden.

Die Unterseite des Befestigers 1 bildet eine Befestigungsseite 7 aus, mit der der Befestiger 1 auf den Gegenstand G aufgesetzt wird, um den Befestiger 1 an diesem zu befestigen (Figur 2).

Die Befestigungsseite 7 ist von einem in Umfangsrichtung verlaufenden Rand 8 eingefasst. Auf diesem Rand 8 kann eine Klebefolie zur Vorfixierung des Befestigers 1 am Gegenstand G vorgesehen sein. Die Klebefolie kann mit einer Abdeckfolie geschützt sein, die vor Gebrauch des Befestigers 1 abgezogen werden kann.

Als weitere Komponente des Befestigers 1 ist als Reservoireinheit ein hohlzylindrischer Reservoirkörper 9 vorgesehen, der in Form eines Kolbens ausgebildet ist.

Die äußere Mantelfläche der einen Hohlraum umschließenden Seitenwand des Reservoirkörpers 9 weist eine periodische Anordnung von identisch ausgebildeten, parallel im Abstand zueinander und in axialer Richtung verlaufenden Rippen 10 auf. Zwischen zwei benachbarten Rippen 10 ist jeweils eine Einbuchtung 11 ausgebildet. Die Gesamtheit der Einbuchtungen 11 bildet eine Kanalstruktur aus. Wie aus den Figuren 2 und 3 entnehmbar, ist der Reservoirkörper 9 an seinem oberen Ende nach außen etwas verbreitert. An der Unterseite des Reservoirkörpers 9 befindet sich ein Bodenteil 12 mit mehreren Austrittsöffnungen 13 (Figur 2).

Als weitere Komponente des Befestigers 1 ist ein Klebstoffreservoir 14 vorgesehen, das in Form eines hohlzylindrischen Körpers ausgebildet ist. Der obere Teil des Klebstoffreservoirs 14 ist gegenüber dem unteren Teil etwas verbreitert, insbesondere ist die Querschnittsfläche des Hohlraums des Klebstoffreservoirs 14 in diesem Bereich etwas größer als im unteren Bereich.

Als weitere Komponente des Befestigers 1 ist ein Deckel 15 vorgesehen. Der Deckel 15 weist ein Deckelsegment 15a und ein hohlzylindrisches Anschlusssegment 15b auf. Zur Befestigung des Deckels 15 am Träger 2 wird das Anschlusssegment 15b in eine in Umfangsrichtung verlaufende Aussparung 16 des Trägers 2 eingesteckt. Dabei liegt das Anschlusssegment 15b dicht am rohrförmigen Ansatz 4 des Trägers 2 an. Das Deckelsegment 15a schließt dabei die Bohrung 5 im rohrförmigen Ansatz 4 ab.

Als weitere Komponente ist ein Stößel 17 vorgesehen. Der obere Teil ist in Form eines massiven Zylinders 17a ausgebildet. Der untere Teil des Stößels 17 bildet einen Stößelkopf 17b, dessen Querschnittsfläche an die Querschnittsfläche des Hohlraums des Reservoirkörpers 9 angepasst ist. Der Stößelkopf 17b ist erheblich breiter als der Zylinder 17a des Stößels 17. Das vordere Ende des Stößelkopfes 17b verjüngt sich konisch.

Als weitere Komponente des Befestigers 1 ist ein Verpackungsdeckel 18 vorgesehen. Mit diesem Verpackungsdeckel 18 kann der Befestiger 1 an der Befestigungsseite 7 abgeschlossen werden.

Die Figuren 2 und 3 zeigen den zusammengebauten Befestiger 1, wobei in Figur 2 der Reservoirkörper 9 in einer Ausgangsstellung und in Figur 3 in einer Betätigungsstellung dargestellt ist.

In beiden Fällen bilden die Komponenten des Befestigers 1 eine koaxiale Anordnung, die rotationssymmetrisch zur Symmetrieachse des Trägers 2 ist. Der Deckel 15 verschließt die Bohrung 5 des Trägers 2 in welcher das Klebstoffreservoir 14 und der Reservoirkörper 9 eingesetzt sind. Der Reservoirkörper 9 ist an der innenliegenden Mantelfläche des Klebstoffreservoirs 14 in axialer Richtung verschiebbar gelagert. Die innere Mantelfläche des Klebstoffreservoirs 14 liegt dicht an der äußeren Mantelfläche des Reservoirkörpers 9 an, so dass die Einbuchtungen 11 des Reservoirkörpers 9 mit der inneren Mantelfläche des Klebstoffreservoirs 14 eine geschlossene Kanalstruktur ausbilden. Der Stößel 17 ist im Hohlraum des Reservoirkörpers 9 angeordnet und dabei am Deckel 15 so befestigt, dass der Stößelkopf 17b dem Bodenteil 12 des Reservoirkörpers 9 zugewandt ist.

In Figur 2 ist der Reservoirkörper 9 in seiner Ausgangsstellung dargestellt, in welcher der Reservoirkörper 9 nach unten hervorsteht. Wie aus Figur 2 ersichtlich ist in einer geschlossenen Aufnahme 19 des Klebstoffreservoirs 14 ein aerober Klebstoff 20 gelagert. Die Aufnahme 19 ist in Umfangsrichtung des Klebstoffreservoirs 14 im Bereich der inneren Mantelfläche des oberen, verteilenden Teils des Klebstoffreservoirs 14 vorgesehen.

Weiterhin ist im Reservoirkörper 9 eine den Stößelkopf 17b umgebende, geschlossene Aufnahme 21 für einen hydrophilen Stoff 22 vorgesehen.

Vorteilhaft ist der aerobe Klebstoff 20 von silanen Polymeren oder von Polyurethan gebildet.

Weiter vorteilhaft enthält der hydrophile Stoff 22 Feuchtigkeit oder ist von einer Feuchtigkeit gebildet.

Dabei ist der hydrophile Stoff 22 von Baumwolle, Cellulose, einem Faserverbundwerkstoff, einem Salz, einem Mineral, einem Harz, Glycerin oder Propylenglykol gebildet. Die Feuchtigkeit ist von Wasser oder Isopropanol gebildet, welche in flüssiger Form oder in Gelform vorliegt.

Die Aufnahmen 19, 21 können in Form von Kunststoff-Folien oder dergleichen gebildet sein.

Die Anordnung gemäß Figur 2 mit dem Reservoirkörper 9 in der Ausgangsstellung stellt den Befestiger 1 vor dessen Gebrauch dar. Der Befestiger 1 wird dann mit dem Verpackungsdeckel 18 abgeschlossen und kann so zu seinem Einsatzort transportiert werden.

Die Anordnung gemäß Figur 3 zeigt den Befestiger 1, wenn er am Gegestand befestigt wird. Die Befestigung erfolgt derart, dass der Reservoirkörper 9 in seiner Ausgangsstellung im Befestiger 1 auf die Oberfläche des Gegenstands G aufgesetzt wird. Dann wird auf den Deckel 15 ein Anpressdruck ausgeübt, das heißt der Deckel 15 wird als Knopf verwendet. Durch die Betätigung des Knopfes wird der Reservoirkörper 9 in den Hohlraum eingeschoben, bis dessen Bodenteil 12 in der Ebene der Befestigungsseite 7 liegt und der die Befestigungsseite 7 umgebende Rand 8 auf der Oberfläche des Gegenstands G aufliegt.

Durch diese Bewegung des Reservoirkörpers 9 relativ zum Träger 2 in seine Betätigungsstellung drückt der Stößelkopf 17b die Aufnahme 21 für den hydrophilen Stoff 22, so dass die Aufnahme 21 aufbricht und der hydrophile Stoff 22 über die Austrittsöffnungen 13 zur Befestigungsseite 7 strömt, das heißt der Stößel 17 bildet ein erstes Durchstoßmittel.

Weiterhin bildet der obere verbreiterte Rand 8 des Reservoirkörpers 9 ein zweites Durchstoßmittel. Bei Verschieben des Reservoirkörpers 9 in die Betätigungsstellung drückt der obere Rand 8 des Reservoirkörpers 9 gegen die Aufnahme 19 mit dem aeroben Klebstoff 20 und bricht Sie auf. Der frei werdende aerobe Klebstoff 20 fließt dann über die Kanalstruktur zur Befestigungsseite 7.

Der aerobe Klebstoff 20 und der hydrophile Stoff 22, welche zur Befestigungsseite 7 transportiert werden, vermischen sich an dieser Befestigungsseite 7 zu einem zweikomponentigen Befestigungsmittel 23, mittels dessen der Befestiger 1 am Gegenstand G nach Aushärten des Befestigungsmittels 23 dauerhaft befestigt ist.

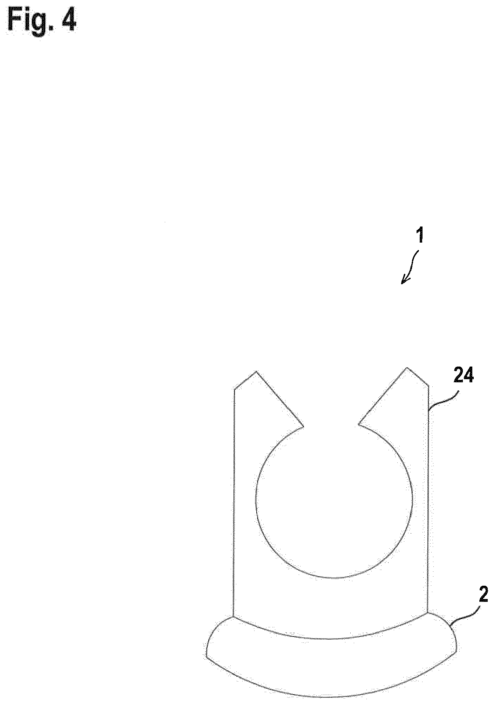

Figur 4 zeigt eine Weiterbildung des Befestigers 1 zu einem Adapter. Hierzu ist auf dem Träger 2 ein Adapterteil befestigt, das im vorliegenden Fall von einer Rohrschelle 24 gebildet ist. Mit der Rohrschelle 24 kann der Adapter an einem rohrförmigen Objekt fixiert werden.

### Bezugszeichenliste

- (1): Befestiger
- (2): Träger
- (3): Grundkörper
- (4): Ansatz
- (5): Bohrung
- (6): Verstärkungsrippen
- (7): Befestigungsseite
- (8): Rand
- (9): Reservoirkörper
- (10): Rippen
- (11): Einbuchtung
- (12): Bodenteil
- (13): Austrittsöffnungen
- (14): Klebstoffreservoir
- (15): Deckel
- (15a): Deckelsegment
- (15b): Anschlusssegment
- (16): Aussparung
- (17): Stößel
- (17a): Zylinder
- (17b): Stößelkopf
- (18): Verpackungsdeckel
- (19): Aufnahme
- (20): aerober Klebstoff
- (21): Aufnahme
- (22): hydrophiler Stoff
- (23): Befestigungsmittel
- (24): Rohrschelle

- G: Gegenstand

## Patentansprüche

1. Befestiger (1) mit einem Träger (2), welcher eine Befestigungsseite (7) zur Befestigung an einem Gegenstand (G) aufweist, **dadurch gekennzeichnet, dass** der Träger (2) in axialer Richtung von einer Bohrung (5) durchsetzt ist, wobei in der Bohrung (5) ein Klebstoffreservoir (14) und eine Reservoireinheit für einen hydrophilen Stoff (22) in axialer Richtung der Bohrung (5) gegeneinander verschiebbar gelagert sind, dass das Klebstoffreservoir (14) und der Aufnahmekörper (19, 21) eine koaxiale Anordnung bilden, wobei das Klebstoffreservoir (14) die Reservoireinheit umschließt, dass in einer Ausgangsstellung der Reservoireinheit relativ zum Träger (2) ein aerober Klebstoff (20) in einer geschlossenen Aufnahme (19) des Klebstoffreservoirs (14) gelagert ist und der hydrophile Stoff (22) in einer geschlossenen Aufnahme (21) in der Reservoireinheit gelagert ist, und dass durch eine Verschiebung der Reservoireinheit in eine Betätigungsstellung die Aufnahmen (19, 21) mittels Durchstoßmitteln aufgebrochen sind und der aerobe Klebstoff (20) durch eine Kanalstruktur zwischen dem Klebstoffreservoir (14) und der Reservoireinheit und der hydrophile Stoff (22) durch Austrittsöffnungen (13) in der Reservoireinheit der Befestigungsseite (7) so zugeführt sind, dass eine selbsttätige Mischung des aeroben Klebstoffs und des hydrophilen Stoffs (22) erfolgt.

2. Befestiger (1) nach Anspruch 1, **dadurch gekennzeichnet, dass** die Reservoireinheit einen hohlzylindrischen Reservoirkörper (9) aufweist, an dessen äußerer Mantelfläche durch in axialer Richtung verlaufenden Rippen (10) getrennte Einbuchtungen (11) vorgesehen sind, welche die Kanalstruktur ausbilden.

3. Befestiger (1) nach Anspruch 2, **dadurch gekennzeichnet, dass** der hohlzylindrische Reservoirkörper (9) ein der Befestigungsseite (7) zugewandtes Bodenteil (12) aufweist, in welchem die Austrittsöffnungen (13) vorgesehen sind.

4. Befestiger (1) nach einem der Ansprüche 2 oder 3, **dadurch gekennzeichnet, dass** das Klebstoffreservoir (14) in Form eines hohlzylindrischen Körpers ausgebildet ist, wobei dessen innenliegende Mantelflächen entlang der äußeren Mantelflächen des Reservoirkörpers (9) führbar sind, und dass die Bohrung (5) einen kreisförmigen Querschnitt aufweist, wobei die Berandungskontur der Bohrung (5) an die Außenkonturen des Reservoirkörpers (9) und der Reservoireinheit angepasst ist.

5. Befestiger (1) nach einem der Ansprüche 1 - 4, **dadurch gekennzeichnet, dass** die Oberseite der Bohrung (5) mit einem mit dem Träger (2) fest verbundenen Deckel (15) abgeschlossen ist.

6. Befestiger (1) nach Anspruch 5, **dadurch gekennzeichnet, dass** bei Überführen in die Betätigungsstellung die Reservoireinheit gegen den Deckel (15) geführt ist, wobei zur Überführung in die Betätigungsstellung ein Anpressdruck auf den Deckel (15) ausgeübt wird.

7. Befestiger (1) nach einem der Ansprüche 3 - 6
, **dadurch gekennzeichnet,**
**dass** in der Ausgangsstellung der Reservoirkörper (9) über die Befestigungsseite (7) hervorsteht, und dass in der Betätigungsstellung die Außenseite des Bodenteils (12) des Reservoirkörpers (9) in der Ebene der Befestigungsseite (7) liegt.

8. Befestiger (1) nach einem der Ansprüche 5 - 7, **dadurch gekennzeichnet, dass** an dem Deckel (15) ein ein Durchstoßmittel bildender Stößel (17) befestigt ist, dass der Stößel (17) einen in den Hohlraum des Reservoirkörpers (9) ragenden Stößelkopf (17b) aufweist, der von der Aufnahme (21) mit dem hydrophilen Stoff (22) umgeben ist, dass bei Überführen des Reservoirkörpers (9) in die Betätigungsstellung der Stößelkopf (17b) die Aufnahme (21) für den hydrophilen Stoff (22) gegen das Bodenteil (12) drückt und aufbricht, so dass der hydrophile Stoff (22) über die Austrittsöffnungen (13) des Bodenteils (12) geführt ist.

9. Befestiger (1) nach einem der Ansprüche 2 - 8, **dadurch gekennzeichnet, dass** der der Befestigungsseite (7) abgewandte obere Randbereich des Reservoirkörpers (9) ein Durchstoßmittel bildet, mittels dessen in der Betätigungsstellung die Aufnahme (19) für den aeroben Klebstoff (20) aufgebrochen ist, so dass dieser über das Kanalsystem zur Befestigungsseite (7) geführt ist.

10. Befestiger (1) nach einem der Ansprüche 1 - 9, **dadurch gekennzeichnet, dass** der Träger (2) einen flächigen Grundkörper (3) mit einem rohrförmigen Ansatz (4), in welchem die Bohrung (5) verläuft, aufweist.

11. Befestiger (1) nach einem der Ansprüche 1 - 10, **dadurch gekennzeichnet, dass** die Befestigungsseite (7) des Trägers (2) mit einem Verpackungsdeckel (18) abschließbar ist.

12. Befestiger (1) nach einem der Ansprüche 1 - 11, **dadurch gekennzeichnet, dass** dieser einen Adapter ausbildet, wobei am Träger (2) ein Adapterteil befestigbar ist.

13. Befestiger (1) nach einem der Ansprüche 1 - 12, **dadurch gekennzeichnet, dass** die Befestigungsseite (7) mit einem eine Klebeschicht aufweisenden Rand (8) eingefasst ist.

14. Befestiger (1) nach einem der Ansprüche 1 - 13, **dadurch gekennzeichnet, dass** der aerobe Klebstoff (20) von silanen Polymeren oder von Polyurethan gebildet ist.

15. Befestiger (1) nach einem der Ansprüche 1 - 14, **dadurch gekennzeichnet, dass** der hydrophile Stoff (22) Feuchtigkeit enthält oder von einer Feuchtigkeit gebildet ist, wobei der hydrophile Stoff (22) von Baumwolle, Cellulose, einem Faserverbundwerkstoff, einem Salz, einem Mineral, einem Harz, Glycerin oder Propylenglykol gebildet ist, und wobei die Feuchtigkeit von Wasser oder Isopropanol gebildet ist, welche in flüssiger Form oder in Gelform vorliegt.

## Claims

1. Mounting device (1) with a support (2) which has a mounting side (7) for attachment to an object (G), **characterised in that** the support (2) is penetrated in axial direction by a bore (5), wherein an adhesive reservoir (14) and a reservoir unit for a hydrophilic substance (22) are mounted in the bore (5) to be displaceable relative to one another in axial direction of the bore (5), that the adhesive reservoir (14) and the receiving body (19, 21) form a coaxial arrangement, wherein the adhesive reservoir (14) surrounds the reservoir unit, that in an initial setting of the reservoir unit relative to the support (2) an aerobic adhesive (20) is stored in a closed receptacle (19) of the adhesive reservoir (14) and the hydrophilic substance (22) is stored in a closed receptacle (21) in the reservoir unit, and that the receptacles (19, 21) are broken open by penetrating means through displacement of the reservoir unit into an actuating setting and the aerobic adhesive (20) is so fed through a canal structure between the adhesive reservoir (14) and the reservoir unit and the hydrophilic substance (22) through outlet openings (13) in the reservoir unit to the mounting side (7) that an automatic mixing of the aerobic adhesive and the hydrophilic substance (22) takes place.

2. Mounting device (1) according to claim 1, **characterised in that** the reservoir unit comprises a hollow-cylindrical reservoir body (9), at the outer circumferential surface of which indentations (11), which are separated by ribs (10) extending in axial direction and which form the channel structure, are provided.

3. Mounting device (1) according to claim 2, **characterised in that** the hollow-cylindrical reservoir body (9) has a base part (12) which faces the mounting side (7) and in which the outlet openings (13) are provided.

4. Mounting device (1) according to one of claims 2 and 3, **characterised in that** the adhesive reservoir (14) is constructed in the form of a hollow-cylindrical body, wherein the internal circumferential surfaces thereof can be guided along the outer circumferential surfaces of the reservoir body (9), and that the bore (5) has a circular cross-section, wherein the boundary contour of the bore (5) is adapted to the outer contours of the reservoir body (9) and the reservoir unit.

5. Mounting device (1) according to any one of claims 1 to 4, **characterised in that** the upper side of the bore (5) is closed by a cover (15) fixedly connected with the support (2).

6. Mounting device (1) according to claim 5, **characterised in that** on transfer to the actuating setting the reservoir unit is led against the cover (15), wherein for transfer to the actuating setting a pressing pressure is exerted on the cover (15).

7. Mounting device (1) according to any one of claims 3 to 6, **characterised in that** in the initial setting the reservoir body (9) projects beyond the mounting side (7) and that in the actuating setting the outer side of the base part (12) of the reservoir body (9) lies in the plane of the mounting side (7).

8. Mounting device (1) according to any one of claims 5 to 7, **characterised in that** a plunger (17) forming a penetrating means is attached to the cover (15), that the plunger (17) has a plunger head (17b), which protrudes into the cavity of the reservoir body (9) and which is surrounded by the receptacle (21) with the hydrophilic substance (22), that on transfer of the reservoir body (9) to the actuating setting the plunger head (17b) presses the receptacle (21) for the hydrophilic substance (22) against the base part (12) and breaks open the receptacle so that the hydrophilic substance (22) is guided via the outlet openings (13) of the base part (12).

9. Mounting device (1) according to any one of claims 2 to 8, **characterised in that** the upper edge region, which is remote from the mounting side (7), of the reservoir body (9) forms a penetrating means by way of which in the actuating setting the receptacle (19) for the aerobic adhesive (20) is broken open so that this is guided by way of the channel system to the mounting side (7).

10. Mounting device (1) according to any one of claims 1 to 9, **characterised in that** the support (2) comprises an areal base body (3) with a tubular projection (7) in which the bore (5) extends.

11. Mounting device (1) according to any one of claims 1 to 10, **characterised in that** the mounting side (7) of the support (2) is closable by a packaging cover (18).

12. Mounting device (1) according to any one of claims 1 to 11, **characterised in that** this forms an adapter, wherein an adapter part is attachable to the support (2).

13. Mounting device (1) according to any one of claims 1 to 12, **characterised in that** the mounting side (7) is bordered by an edge (8) having an adhesive layer.

14. Mounting device (1) according to any one of claims 1 to 13, **characterised in that** the aerobic adhesive (20) is formed by silane polymers or by polyurethane.

15. Mounting device (1) according to any one of claims 1 to 14, **characterised in that** the hydrophilic substance (22) contains moisture or is formed by moisture, wherein the hydrophilic substance (22 is formed by cotton, cellulose, a fibre composite material, a salt, a mineral, a resin, glycerol or propylene glycol, and wherein the moisture is formed by water or isopropanol, which is present in liquid form or in gel form.

## Revendications

1. Dispositif de fixation (1) pourvu d'un support (2) muni d'un côté fixation (7) conçu pour la fixation à un objet (G), **caractérisé par le fait que** le support (2) est parcouru par un alésage (5) dans le sens axial, un réservoir d'adhésif (14), et une unité de réserve destinée à une substance hydrophile (22), étant montés avec faculté de déplacement l'un par rapport à l'autre dans l'alésage (5), dans le sens axial dudit alésage (5) ; **par le fait que** le réservoir d'adhésif (14) et le corps de réception (19, 21) forment un agencement coaxial, ledit réservoir d'adhésif (14) ceinturant l'unité de réserve ; **par le fait que**, dans une position initiale occupée par ladite unité de réserve vis-à-vis du support (2), un adhésif aérobie (20) est stocké dans un logement fermé (19) dudit réservoir d'adhésif (14), et la substance hydrophile (22) est stockée dans un logement fermé (21) situé dans ladite unité de réserve ; et **par le fait que**, sous l'effet d'un déplacement de ladite unité de réserve vers une position d'actionnement, lesdits logements (19, 21) sont fracturés à l'aide de moyens de perforation, sachant que l'adhésif aérobie (20) et la substance hydrophile (22) sont délivrés en empruntant, respectivement, une structure de canalisation entre le réservoir d'adhésif (14) et l'unité de réserve, et des orifices de sortie (13) pratiqués dans ladite unité de réserve du côté fixation (7), de manière à provoquer un mélange automatique dudit adhésif aérobie et de ladite substance hydrophile (22).

2. Dispositif de fixation (1) selon la revendication 1, **caractérisé par le fait que** l'unité de réserve est dotée d'un corps de réserve (9) cylindrique creux, sur la surface de l'enveloppe extérieure duquel sont prévues des indentations (11) qui forment la structure de canalisation et sont séparées par des nervures (10) s'étendant dans le sens axial.

3. Dispositif de fixation (1) selon la revendication 2, **caractérisé par le fait que** le corps de réserve (9) cylindrique creux comporte une partie de fond (12) qui pointe vers le côté fixation (7), et dans laquelle les orifices de sortie (13) sont prévus.

4. Dispositif de fixation (1) selon l'une des revendications 2 ou 3, **caractérisé par le fait que** le réservoir d'adhésif (14) est réalisé sous la forme d'un corps cylindrique creux, les surfaces des enveloppes intérieures de ce dernier pouvant être guidées le long des surfaces des enveloppes extérieures du corps de réserve (9) ; et **par le fait que** l'alésage (5) présente une section transversale circulaire, le profil de délimitation marginale dudit alésage (5) étant adapté aux profils extérieurs dudit corps de réserve (9) et de l'unité de réserve.

5. Dispositif de fixation (1) selon l'une des revendications 1 - 4, **caractérisé par le fait que** la face supérieure de l'alésage (5) est occultée par un couvercle (15) relié rigidement au support (2).

6. Dispositif de fixation (1) selon la revendication 5, **caractérisé par le fait que** l'unité de réserve est guidée contre le couvercle (15) lors d'un transfert à la position d'actionnement, une pression de contact étant exercée sur ledit couvercle (15) en vue dudit transfert à la position d'actionnement.

7. Dispositif de fixation (1) selon l'une des revendications 3 - 6, **caractérisé par le fait que** le corps de réserve (9) fait saillie au-delà du côté fixation (7) dans la position initiale ; et **par le fait que**, dans la position d'actionnement, la face extérieure de la partie de fond (12) dudit corps de réserve (9) est située dans le plan dudit côté fixation (7).

8. Dispositif de fixation (1) selon l'une des revendications 5 - 7, **caractérisé par le fait qu'**un pointeau (17) formant un moyen de perforation est fixé au couvercle (15) ; **par le fait que** ledit pointeau (17) est nanti d'une tête (17b) pénétrant dans la cavité du corps de réserve (9) et entourée par le logement (21) renfermant la substance hydrophile (22) ; et **par le fait que**, lors d'un transfert dudit corps de réserve (9) à la position d'actionnement, ladite tête (17b) du pointeau presse ledit logement (21) dédié à la substance hydrophile (22) contre la partie de fond (12), et provoque sa fracture, de façon telle que ladite substance hydrophile (22) soit guidée par l'intermédiaire des orifices de sortie (13) de ladite partie de fond (12).

9. Dispositif de fixation (1) selon l'une des revendications 2 - 8, **caractérisé par le fait que** la région marginale supérieure du corps de réserve (9), tournée à l'opposé du côté fixation (7), forme un moyen de perforation à l'aide duquel le logement (19) dédié à l'adhésif aérobie (20) est fracturé, dans la position d'actionnement, de façon telle que ledit adhésif soit guidé vers ledit côté fixation (7) en empruntant le système de canalisation.

10. Dispositif de fixation (1) selon l'une des revendications 1 - 9, **caractérisé par le fait que** le support (2) présente un corps de base aplati (3), muni d'un appendice annulaire (4) dans lequel l'alésage (5) s'étend.

11. Dispositif de fixation (1) selon l'une des revendications 1 - 10, **caractérisé par le fait que** le côté fixation (7) du support (2) peut être obturé par un couvercle d'emballage (18).

12. Dispositif de fixation (1) selon l'une des revendications 1 - 11, **caractérisé par le fait que** ledit dispositif constitue un adaptateur, une partie d'adaptation pouvant être fixée au support (2).

13. Dispositif de fixation (1) selon l'une des revendications 1 - 12, **caractérisé par le fait que** le côté fixation (7) est entouré d'un bord (8) pourvu d'une couche adhésive.

14. Dispositif de fixation (1) selon l'une des revendications 1 - 13, **caractérisé par le fait que** l'adhésif aérobie (20) consiste en des polymères de silane ou en du polyuréthane.

15. Dispositif de fixation (1) selon l'une des revendications 1 - 14, **caractérisé par le fait que** la substance hydrophile (22) contient de l'humidité ou est constituée d'un milieu humide, ladite substance hydrophile (22) consistant en de la laine, en de la cellulose, en un matériau composite fibreux, en un sel, en un minéral, en une résine, en de la glycérine ou en du propylène glycol, et ledit milieu humide consistant en de l'eau ou en de l'isopropanol se présentant sous forme liquide ou sous la forme d'un gel.
